# EUROPEAN PATENT APPLICATION

(11) **EP 1 334 807 A1**
(43) Date of publication of application: **13.08.2003**
(21) Application number: 03250735.2
(22) Date of filing: 05.02.2003
(51) Int. Cl.: B25J 17/02

(54) **A double spherical robot joint**

(30) Priority: 07.02.2002 JP 2002030320
(71) Applicant: The University of Tokyo, Bunkyo-Ku, Tokyo (JP)
(72) Inventor: Nakamura, Yoshihiko, Tokyo (JP); Okada, Masafumi, Tokyo (JP); Shinohara, Tetsuya, Tokyo (JP)
(74) Representative: Fenlon, Christine Lesley

(57) **Abstract**

As a double-arm shoulder joint mechanism of a double-arm robot and a both-legs hip joint mechanism of a biped-walk robot, use is made of a double spherical joint having a construction such that joint rotation axes of 6 DOF are intersected at one point. As the double-arm shoulder joint mechanism of the double-arm robot, arms are connected respectively to a first spherical joint and a second spherical joint of the double spherical joint. As the both-legs hip joint mechanism of the biped-walk robot, legs are connected respectively to the first spherical joint and the second spherical joint of the double spherical joint.

## Description

The present invention relates to a double-arm shoulder joint mechanism of a double-arm robot and a both-legs hip joint mechanism of a biped-walk robot, and also relates to a shoulder joint mechanism and a hip joint mechanism of a humanoid robot utilizing the above mechanisms.

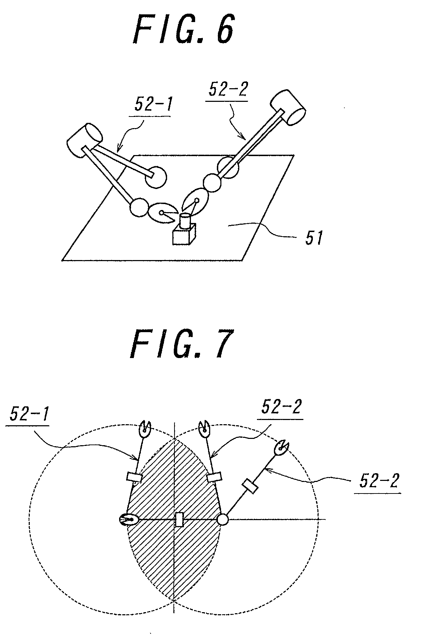

Generally, as shown in Fig. 6, the double-arm robot utilized for industrial use and so on is realized by two robots 52-1, 52-2 independently arranged to a base 51. A working space, where arms of the robots 52-1, 52-2 can reach at the same time, is shown by a hatched portion of Fig. 7, when viewed from an upside position. This working space, where the robots 52-1, 52-2 can be cooperated, is small as compared with an arm length of respective robots 52-1, 52-2. As a method of extending this working space, it is thinkable that an actuator for rotating whole base 51 is provided. However, this method increases a degree of freedom (hereinafter, sometimes abbreviated as DOF), and a weight and a volume of the robot are increased accordingly.

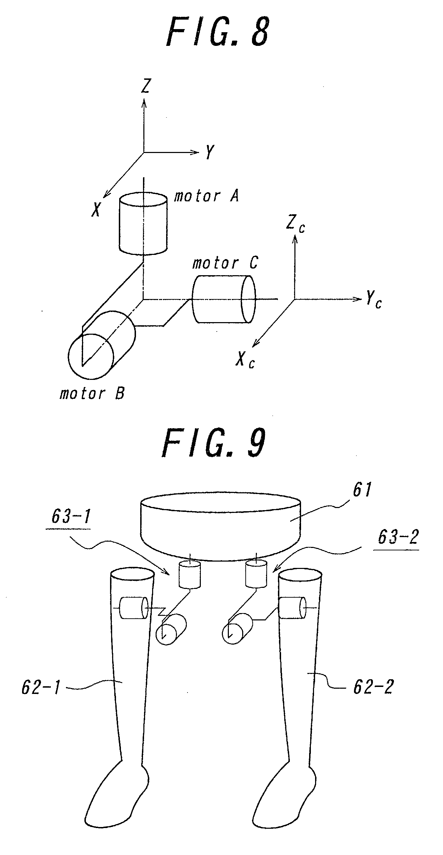

On the other hand, concerning the hip joint of the biped-walk robot, for example as shown in Fig. 8, use is made of a mechanism such that three rotation joints made of motors A, B and C respectively are arranged in such a manner that rotation axes of three motors are intersected at one point.

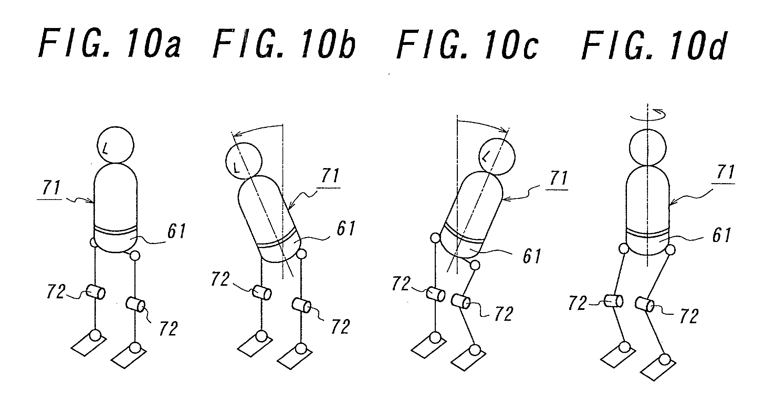

At the same time, the hip joint of human is generally formed by a spherical joint having 3DOF at right side and left side respectively.
In addition to this, human has degrees of freedom of a hip and a backbone, and utilizes all these degrees of freedom effectively when walking. In the humanoid robot up to now, two legs 62-1, 62-2 are provided to a waist 61 via hip joints 63-1, 63-2 respectively as shown in Fig. 9, while there are no degrees of freedom of the hip and the backbone, from the view point of achieving a weight saving by decreasing the number of actuators. In this case, the following problems occur.
(1) In order to incline an upper body 71 including the waist 61 from side to side or to rotate it around a vertical axis as shown in Figs. 10a-10d, it is necessary to bend knees 72 so as to maintain the manipulability of the COG (center of gravity) in the horizontal direction in the frontal plane.
(2) When the humanoid robot performs a walking motion, it is necessary to control a right-and-left balance by means of the upper body 71. Therefore, when walking, the humanoid robot must be walked under such a condition that the knees 72 are always bended so as to control the right-and-left balance at any directions. In this case, the motion of the humanoid robot looks awkwardly.
(3) Since an upright posture, while the knees 72 are bended, imposes a burden on the knees 72, it is necessary to make the actuator for driving the knees 72 to a high-power type. Therefore, a power shortage sometimes occurs.
(4) As a method of solving the above problems, it is thinkable that the waist 61 is provided to have a further DOF. However, it is not desirable to increase DOF with respect to the humanoid robot since it requires a weight saving and a downsizing.

The present invention seeks to provide a double-arm shoulder joint mechanism, which can perform a weight saving by a mechanism design having low DOF, and, which can obtain a wide working space, where arms of a robot can be cooperated, while it maintains low DOF.

The present invention also seeks to provide a both-legs hip joint mechanism of a biped-walk robot, which can perform a weight saving by a mechanism design having low DOF, which can add a waist joint function to a known hip joint whole low DOF is maintained, and, which can achieve natural walking motion.

According to preferred embodiments of the invention, a double-arm shoulder joint mechanism of a double-arm robot comprises: a double spherical joint with 6 DOF (degrees of freedom) having a construction such that joint rotation axes are intersected at one point; and two arms connected respectively to both ends of the double spherical joint. In the double-arm shoulder joint mechanism according to embodiments of the invention, it is possible to extend the working space, where arms can be cooperated, without changing the number of DOF.

Moreover, the double-arm shoulder joint mechanism according to embodiments of the invention may be used as the shoulder joint of the humanoid robot. In his case, it is also possible to extend the working space, where two arms of the humanoid robot can be cooperated.

According to preferred embodiments of the invention, a both-legs hip joint mechanism of a biped-walk robot comprises: a double spherical joint with 6 DOF (degrees of freedom) having a construction such that joint rotation axes are intersected at one point; and two legs connected respectively to both ends of the double spherical joint. In the both-legs hip joint mechanism according to the embodiments of the invention, it is possible to add a waist joint function to a hip joint function without increasing DOF.

Moreover, the both-legs hip joint mechanism according to the preferred embodiments may be used as the hip joint of the humanoid robot. In this case, it is possible to perform various motions of the humanoid robot such as inclining or rotating of the upper body while the knees are maintained in a straight state, so that it is possible to achieve a natural walking motion.

For a better understanding of the invention and to show how the same may be carried into effect, reference is made to the attached drawings, wherein:
Fig. 1 is a schematic view showing one embodiment of a double spherical joint according to the preferred embodiment of the invention;
Fig. 2 is a schematic view illustrating one embodiment of a double-arm robot utilizing the double spherical joint according to the invention;
Fig. 3 is a schematic view depicting a working space of the double-arm robot shown in Fig. 2;
Fig. 4 is a schematic view showing one embodiment of a hip joint mechanism of a humanoid robot utilizing the double spherical joint according to the invention;
Figs. 5a - 5d are schematic views respectively illustrating one motion of the humanoid robot utilizing the double spherical joint as the hip joint according to preferred embodiments of the invention;
Fig. 6 is a schematic view depicting one embodiment of the known double-arm robot;
Fig. 7 is a schematic view showing the working space of the double-arm robot shown in Fig. 6;
Fig. 8 is a schematic view illustrating one embodiment of the spherical joint;
Fig. 9 is a schematic view depicting one embodiment of the hip joint of the known humanoid robot; and
Figs. 10a - 10d are schematic views respectively showing one motion of the known humanoid robot.

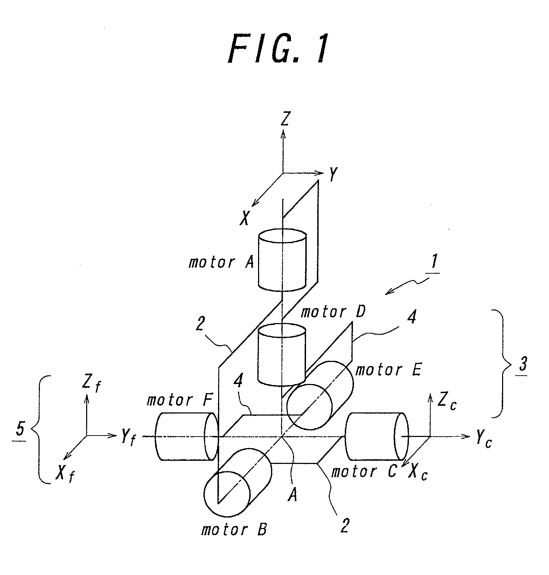

Fig. 1 is a schematic view showing one embodiment of a double spherical joint used for a double-arm shoulder joint mechanism and a both-legs hip joint mechanism according to the invention. In the embodiment shown in Fig. 1, a double spherical joint 1 comprises: a first spherical joint 3 constructed by motors A, B and C utilized as an actuator, and a link 2 used for connecting respective rotation axes of the motors; and a second spherical joint 5 constructed by motors D, E and F utilized as an actuator, and a link 4 used for connecting respective rotation axes of the motors. Moreover, in the double spherical joint 1, rotation centers of the first spherical joint 3 and the second spherical joint 5 are connected at one point A. In this mechanism mentioned above, as is the same as the mechanism shown in Fig. 8, a coordinate system of XcYcZc fixed to the motor C and a coordinate system of XfYfZf fixed to the motor F show arbitrary posture independently with respect to a fixed coordinate system of XYZ. Further, it should be noted that the motors A - F include gears (not shown) used for controlling a rotation number other than the motor itself used as a driving means.

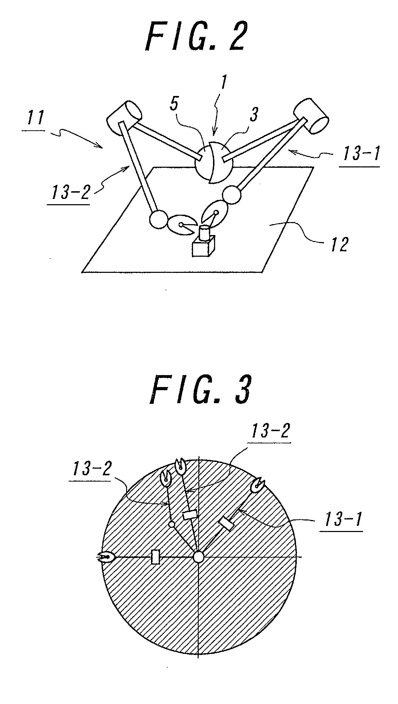

It is also feature of the invention that the double-arm robot is contructed by utilizing the double spherical joint 1 mentioned above. That is, as shown in Fig. 2, the double-arm shoulder mechanism of a double-arm robot 11 is realized by fixing the double spherical joint 1 to a base 12, connecting one arm 13-1 to the first spherical joint 3 of the double spherical joint 1, and connecting the other arm 13-2 to the second spherical joint 5 of the double spherical joint 1. In this case, a working space, where the arms 13-1, 13-2 can be cooperated, is shown in Fig. 3 by a hatched portion, and it becomes extremely larger as compared with that of the known example shown in Fig. 7 which utilizes no double spherical joint.

As one embodiment, it is possible to utilize the double-arm shoulder joint mechanism mentioned above as the shoulder joint mechanism of the humanoid robot. In this case, it is possible to realize the shoulder joint mechanism of the humanoid robot having a large working space.

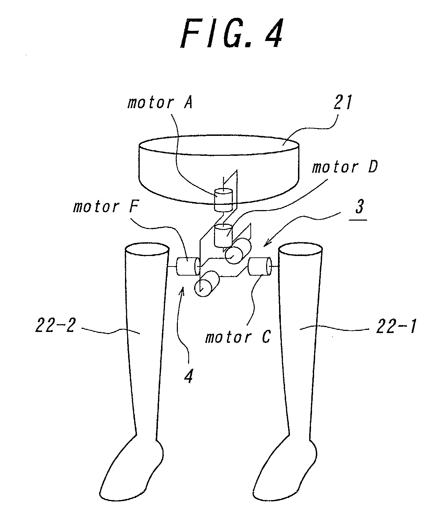

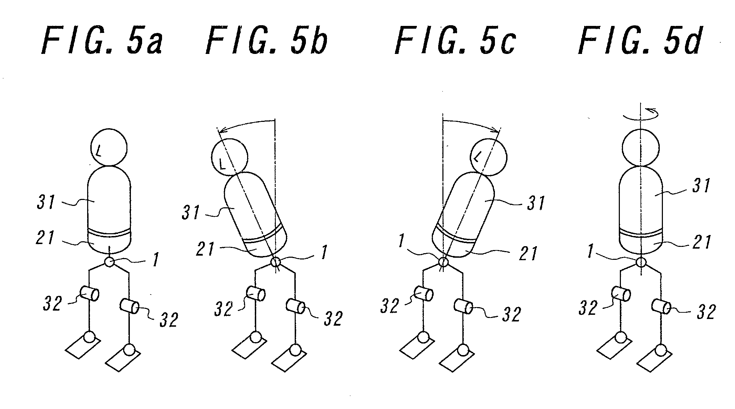

As another embodiment, it is possible to utilize the both-legs hip joint mechanism as the hip joint mechanism of the biped-walk robot and the humanoid robot. Fig. 4 is a schematic view showing one embodiment of the hip joint mechanism of the humanoid robot utilizing the both-legs hip joint mechanism according to the invention. In the embodiment shown in Fig. 4, the double spherical joint 1 is fixed to a waist 21 by connecting a common axis of the motor A of the first spherical joint 3 and the motor D of the second spherical joint 5 to the waist 21. In addition, one leg 22-1 is connected to a rotation axis of the motor C of the first spherical joint 3, and the other leg 22-2 is connected to a rotation axis of the motor F of the second spherical joint 5. Thereby, the following effects can be obtained.
(1) As shown in Figs. 5a - 5d, it is possible to incline an upper body 31 back-and forth or right-and-left and to rotate the upper body 31 around a vertical axis, and theses motions can be operated independently to the motions of the legs. Therefore, it is not necessary to bend knees 32.
(2) Even in the case of a walking motion, a motion of the upper body for controlling a balance can be controlled independently. Therefore, it is possible to control the body balance in the walking motion only by the motion of the upper body without controlling the balance of whole legs including the knees 32, and thus a natural motion like human can be realized.
(3) Even in the case of an upright posture, since the upper body can be served to control a balance, it is not possible to bend the knees 32 and it is possible to save energy consumption and power of the actuator. Therefore, it is possible to design a compact and weight saving actuator.
(4) In addition to a hip joint function, this mechanism realized a waist joint function such as upper body's inclination, twist and rotation only by the both-legs hip joint having 6 DOF.

As is clearly understood from the above explanations, according to the invention, the following effects can be obtained under the same DOF as that of the known one.
(a) It is possible to extend the working space, where arms of the double-arm robot can be cooperated.
(b) In the case that the mechanism according to the invention is utilized as the shoulder joint mechanism of the humanoid robot, it is possible to construct the mechanism having large working space.
(c) It is possible to incline, twist and rotate the hip joint and the upper body of the humanoid robot.
(d) It is possible to control a center of gravity of back-and-forth or right-and-left by moving the upper body while the knees are maintained in a straight state.
(e) It is possible to perform a walking motion while the knees are maintained in a straight state.
(f) It is possible to decrease a burden for the actuator of the knees, and thus it is possible to improve energy consumption and power shortage of the motor.

## Claims

1. A double-arm shoulder joint mechanism of a double-arm robot comprising: a double spherical joint with 6 DOF (degrees of freedom) having a construction such that joint rotation axes are intersected at one point; and two arms connected respectively to both ends of the double spherical joint.

2. The double-arm shoulder joint mechanism according to claim 1, wherein the double-arm shoulder joint mechanism is utilized as a shoulder joint of a humanoid robot.

3. A both-legs hip joint mechanism of a biped-walk robot comprising: a double spherical joint with 6 DOF (degrees of freedom) having a construction such that joint rotation axes are intersected at one point; and two legs connected respectively to both ends of the double spherical joint.

4. The both-legs hip joint mechanism according to claim 3, wherein the both-legs hip joint mechanism is utilized as a hip joint of the humanoid robot.

5. The joint mechanism according to claim one of claims 1 - 4, wherein respective rotations of 6 DOF is performed by a uniaxial motor and a gear.
